(19) Europäisches Patentamt
European Patent Office
Office européen des brevets

(11) Veröffentlichungsnummer: **0 000 748**
A1

# (12) EUROPÄISCHE PATENTANMELDUNG

(21) Anmeldenummer: 78100534.3

(22) Anmeldetag: 28.07.78

(51) Int. Cl.²: **C 08 F 10/00**,
C 08 F 4/24, C 08 F 4/22

(30) Priorität: 03.08.77 DE 2734909

(43) Veröffentlichungstag der Anmeldung:
21.02.79 Patentblatt 79/4

(84) Benannte Vertragsstaaten:
BE CH DE FR GB NL SE

(71) Anmelder: BASF Aktiengesellschaft
Carl-Bosch-Strasse 38
D-6700 Ludwigshafen(DE)

(72) Erfinder: Schulze, Kurt
Kastanienweg 20
D-5047 Wesseling(DE)

(54) Verfahren zum Herstellen von Polymerisaten des Äthylens.

(57) Verfahren zum Herstellen von Polymerisaten des Aethylens durch Polymerisation des Monomeren bei erhöhten Temperaturen in einem unter den Verfahrensbedingungen flüssigen, gesättigten Kohlenwasserstoff, in dem sowohl das Monomere als auch das gebildete Polymerisat sich lösen, mittels eines Chrom-oxid- Trägerkatalysators, der erhalten wird aus einem Katalysator - Vorprodukt- welches seinerseits ein mit einer Chromverbindung homogen beladener, auf Siliciumdioxid basierender kleinteiliger Trägerstoff ist - indem man (1) das Katalysator- Vorprodukt - gegebenenfalls unter Zusatz eines Promotors-in der Hitze mit einem Sauerstoff enthaltendem Gas behandelt, und dann (2) auf das aus Stufe (1) erhaltene Produkt Kohlenmonoxid einwirken lässt.

Spezifikum des Verfahrens liegt darin, dass man als Chromoxid - Trägerkatalysator einen solchen einsetzt, bei dessen Herstellung aus dem Katalysator - Vorprodukt man in den Stufen (1) sowie (2) jeweils den Feststoff in Form eines Wirbelbetts vorliegen lässt, das durch einen Trägergasstrom aufrecht erhalten wird, mit den Massgaben, dass (1) in Stufe (1) die Sauerstoff - Behandlung bei einer Temperatur von 400 bis 1500°C über eine Zeitspanne von wenigstens 30 Minuten erfolgt, und (2) in Stufe (2) die Kohlenmonoxid - Behandlung bei einer Temperatur von 250 bis 500°C über eine Zeitspanne von 0,5 bis 3 Stunden erfolgt mittels eines wasserfreien und sauerstofffreien Gases, welches aus Stickstoff besteht, dem - über die Gesamtzeit der Kohlenmonoxid - Behandlung gleichmässig verteilt - insgesamt 100 bis 1000 Mol.% - bezogen auf den Chromtrioxid - Gehalt des aus Stufe (1) erhaltenen Produkts - Kohlenmonoxid zugesetzt sind.

BASF Aktiengesellschaft                    O. Z. 0050/032726

Verfahren zum Herstellen von Polymerisaten des Äthylens

Die vorliegende Erfindung betrifft ein Verfahren zum Herstellen von Homopolymerisaten des Äthylens oder Copolymerisaten des Äthylens mit bis zu 15 Mol.% - bezogen auf das Äthylen - C$_3$- bis C$_8$- $\alpha$-Monoolefinen durch Polymerisation des bzw. der Monomeren bei Temperaturen von 100 bis 200°C in einem unter den Verfahrensbedingungen flüssigen, gesättigten Kohlenwasserstoff, in dem sowohl das Monomere bzw. die Monomeren als auch das gebildete Polymerisat sich lösen, mittels eines Chromoxid-Trägerkatalysators, der erhalten wird aus einem Katalysator-Vorprodukt - welches seinerseits ein mit einer Chromverbindung, welche Chromtrioxid oder eine unter den Bedingungen der Stufe (1) in Chromtrioxid übergehende Chromverbindung ist, im Gewichtsverhältnis Trägerstoff : Chromverbindung (gerechnet als Chromtrioxid) von 100 : 0,1 bis 100 : 10, insbesondere von 100 : 0,5 bis 100 : 6, homogen beladener, aus Siliciumdioxid bestehender bzw. auf Siliciumdioxid basierender kleinteiliger Trägerstoff ist - indem man

(1) das Katalysator-Vorprodukt - gegebenenfalls unter Zusatz eines Promotors im Gewichtsverhältnis Katalysator-Vorprodukt : Promotor von 100 : 0,1 bis 100 : 10, insbesondere von 100 : 1 bis 100 : 4 -

HWz/Mm

in der Hitze mit einem Sauerstoff enthaltendem
Gas behandelt, und dann

(2)      auf das aus Stufe (1) erhaltene Produkt Kohlenmonoxid einwirken läßt.

Verfahren dieser Art weisen gegenüber vergleichbaren anderen Verfahren bekanntlich eine Reihe vorteilhafter Aspekte
auf, lassen andererseits aber auch noch den einen oder
anderen Wunsch offen. Ein solcher Wunsch besteht z.B.
darin, die Polymerisate mit möglichst hoher Katalysatorausbeute (= pro Gewichtseinheit Katalysator erzeugte Gewichtsmenge an Polymerisat) zu erhalten. Dieser Wunsch
wird insbesondere dadurch verständlich, daß mit zunehmender Katalysatorausbeute Polymerisate mit abnehmendem Gehalt an Katalysatorreststoffen erhalten werden; - wobei
letzterer möglichst so gering sein sollte, daß ein - aufwendiger - Reinigungsschritt zur Entfernung der Reststoffe
entfallen kann.

Mithin war es eine Aufgabe der vorliegenden Erfindung, ein
technisch fortschrittliches Verfahren der eingangs definierten Art aufzuzeigen, insbesondere ein Verfahren, das
es möglich macht, zu relativ sehr hohen Katalysatorausbeuten zu kommen.

Es wurde gefunden, daß die gestellte Aufgabe gelöst werden
kann, wenn man einen Katalysator einsetzt, bei dessen Herstellung aus dem Vorprodukt man in den Stufen (1) sowie
(2) unter jeweils speziell ausgewählten Bedingungen jeweils
den Feststoff in Form eines Wirbelbetts vorliegen läßt.

Gegenstand der vorliegenden Erfindung ist dementsprechend
ein Verfahren zum Herstellen von Homopolymerisaten des
Äthylens oder Copolymerisaten des Äthylens mit bis zu 15 Mol.% - bezogen auf das Äthylen - $C_3$- bis $C_8$-α-Mono-olefinen durch Polymerisation des bzw. der Monomeren bei Temperaturen von 100 bis 200°C in einem unter den Verfahrensbedingungen flüssigen, gesättigten Kohlenwasserstoff, in dem sowohl das Monomere bzw. die Monomeren als auch das gebildete Polymerisat sich lösen, mittels eines Chromoxid-Trägerkatalysators, der erhalten wird aus einem Katalysator-Vorprodukt - welches seinerseits ein mit einer Chromverbindung, welche Chromtrioxid oder eine unter den Bedingungen der Stufe (1) in Chromtrioxid übergehende Chromverbindung ist, im Gewichtsverhältnis Trägerstoff : Chromverbindung (gerechnet als Chromtrioxid) von 100 : 0,1 bis 100 : 10, insbesondere von 100 : 0,5 bis 100 : 6, homogen beladener, aus Siliciumdioxid bestehender bzw. auf Siliciumdioxid basierender kleinteiliger Trägerstoff ist - indem man

(1)  das Katalysator-Vorprodukt - gegebenenfalls unter Zusatz eines Promotors im Gewichtsverhältnis Katalysator-Vorprodukt : Promotor von 100 : 0,1 bis 100 : 10, insbesondere von 100 : 1 bis 100 : 4, - in der Hitze mit einem Sauerstoff enthaltendem Gas behandelt, und dann

(2)  auf das aus Stufe (1) erhaltene Produkt Kohlenmonoxid einwirken läßt.

Das erfindungsgemäße Verfahren ist dadurch gekennzeichnet, daß man als Chromoxid-Trägerkatalysator einen solchen einsetzt, bei dessen Herstellung aus dem Katalysator-Vorprodukt man in den Stufen (1) sowie (2) jeweils den Feststoff in Form eines Wirbelbetts vorliegen läßt, das durch einen Trägergasstrom aufrecht erhalten wird, mit den Maßgaben, daß

(1) in Stufe (1) die Sauerstoff-Behandlung bei einer Temperatur von 400 bis 1500, insbesondere von 530 bis 1200°C, über eine Zeitspanne von wenigstens 30 Minuten erfolgt mittels eines wasserfreien Trägergases, welches aus 10 bis 100 Vol.% Sauerstoff und - zu 100 Vol.% ergänzend - 90 bis 0 Vol.% Stickstoff besteht, und

(2) in Stufe (2) die Kohlenmonoxid-Behandlung bei einer Temperatur von 250 bis 500, insbesondere von 270 bis 450°C, über eine Zeitspanne von 0,5 bis 3, insbesondere von 0,75 bis 1,5, Stunden erfolgt mittels eines wasserfreien und sauerstofffreien Trägergases, welches aus Stickstoff besteht, dem - über die Gesamtzeit der Kohlenmonoxid-Behandlung gleichmäßig verteilt - insgesamt 100 bis 1000, insbesondere 150 bis 400 Mol.% - bezogen auf den Chromtrioxid-Gehalt des aus Stufe (1) erhaltenen Produkts - Kohlenmonoxid zugesetzt sind.

Zu dem neuen Verfahren ist im einzelnen das folgende zu bemerken:

Kernstück ist die Verwendung eines speziellen Chromoxid-Trägerkatalysators, der aus einem bestimmten Katalysator-Vorprodukt über zwei Stufen in bestimmter Weise erhalten wird.

Das Katalysator-Vorprodukt als solches ist mit keinen Besonderheiten verbunden; es kann ein solches sein, wie es bei der Polymerisation von Olefinen mittels Chromoxid-Trägerkatalysatoren üblich ist. Für den erfindungsgemäßen Zweck ist es zweckmäßig, wenn dem Vorprodukt ein Trägerstoff zugrunde liegt, der eine Teilchengröße von 0,02 bis 3, insbesondere von 0,04 bis 1,5 mm hat. Es ist ferner zweckmäßig,

Wenn der Trägerstoff aus Siliciumdioxid besteht bzw. ein Siliciumdioxid ist, das chemisch oder physikalisch verbunden ist mit einer Komponente aus den Elementen Aluminium, Titan, Zirkon, Molybdän, Vanadin oder Thor, wobei diese Komponente ein Oxid des betroffenen Elements ist oder eine unter den Bedingungen der Stufe (1) in ein Oxid übergehende Komposition des betroffenen Elements. Bei Trägerstoffen, die zusätzlich zum Silicium eine Fremdkomponente enthalten, kann diese (gerechnet als Oxid) bis zu 20, insbesondere bis zu 15 Gewichtsprodzent - bezogen auf das Gesamtgewicht des Trägerstoffs - ausmachen. Als Trägerstoff besonders gut geeignet sind Siliciumdioxid/Aluminiumoxid-Mischoxide, die 0,1 bis 15 Gewichtsprozent - bezogen auf das Gesamtgewicht des Trägerstoffs - an Aluminiumoxid enthalten.

Das Katalysator-Vorprodukt, d.h. der mit einer Chromverbindung, welche Chromtrioxid oder eine unter den Bedingungen der Stufe (1) in Chromtrioxid übergehende Chromverbindung ist, - in an sich bekannter Weise - beladene Trägerstoff, wird in einer ersten Stufe (1) in bestimmter, oben definierter Weise mit Sauerstoff behandelt. Dabei ist es von besonderer Wichtigkeit, daß man den Feststoff in Form eines Wirbelbetts vorliegen läßt; - wobei man sich solcher Vorrichtungen und Verfahrensweisen bedienen kann, wie sie bei Wirbelbett-Verfahren üblich sind. Wie sich gezeigt hat, bietet sich als Trägergas vornehmlich Luft an. Wie sich ferner gezeigt hat, ist die Zeitspanne des Wirbelns - abgesehen von der Mindestzeitspanne von 30 Minuten - zwar nicht kritisch, sollte aber aus Gründen der Zweckmäßigkeit im allgemeinen 2 bis 15 Stunden betragen.

In einer besonderen Ausgestaltung wird die Sauerstoff-Behandlung in Stufe (1) kombiniert mit einer Behandlung durch einen Promotor. Die Promotoren können dabei die einschlägig üblichen sein, wie insbesondere Ammoniumsilikofluorid $(NH_4)_2SiF_6$, und können dem Katalysator-Vorprodukt vor oder bei dem Wirbeln zugesetzt werden.

Im Anschluß an die erste Stufe (1) und vor Durchführung der zweiten Stufe (2) empfiehlt es sich in praktisch allen Fällen, zum Erreichen des gewünschten Effekts die Wirbelbett-Apparatur - mit dem Feststoff in Form eines Wirbelbetts - mittels eines Trägergasstroms aus wasserfreiem und sauerstofffreiem Stickstoff so lange zu spülen, bis der im Zuge der ersten Stufe (1) eingebrachte freie Sauerstoff verdrängt ist.

In einer zweiten Stufe (2) wird dann das aus Stufe (1) erhaltene - vorzugsweise sauerstofffrei gespülte - Produkt in bestimmter, oben definierter Weise mit Kohlenmonoxid behandelt und so in den eigentlichen Chromoxid-Trägerkatalysator übergeführt. Auch hierbei ist es von besonderer Wichtigkeit, daß man den Feststoff in Form eines Wirbelbetts vorliegen läßt, ferner, daß das Trägergas wasserfrei und sauerstofffrei ist.

Das Herstellen von Polymerisaten des Äthylens unter Verwendung der neuen Katalysatoren erfolgt mittels des sog. "Lösungs-Polymerisationsverfahrens", wobei als Solvent insbesondere Cyclohexan in Betracht kommt. Das Polymerisationsverfahren als solches weist - abgesehen von der erfindungsgemäßen Eigenart - keine Besonderheiten auf und kann in den einschlägig üblichen technologischen Ausgestaltungen durchgeführt werden. Diese sind aus der Literatur (vgl. dazu etwa die deutsche Patentschrift 1 051 004 grundlegenden Inhalts sowie die dazu bekanntgewordenen Weiterentwicklungen) und Praxis wohlbekannt, so daß sich nähere Ausführungen erübrigen. Es ist allenfalls noch zu sagen, daß im Falle des Herstellens von Copolymerisaten des Äthylens mit $\alpha$-Mono-

0000748

olefinen als solche vor allem Propen, Buten-1, 4-Methyl-
penten-1, Hexen-1 und Octen-1 in Betracht kommen.

Beispiel 1

a) Herstellen des Katalysators

Es wird ausgegangen von einem Katalysator-Vorprodukt,
bestehend aus einem mit Chromtrioxid im Gewichtsverhältnis Trägerstoff : Chromtrioxid von 100 : 4,4 homogen beladenen Siliciumdioxid/Aluminiumoxid-Mischoxid,
welches 0,4 Gewichtsprozent - bezogen auf das Gesamtgewicht des Mischoxids - Aluminiumoxid enthält und eine
Teilchengröße von 0,04 bis 1,5 mm hat.

Dieses Vorprodukt vermischt man mit einem Promotor
(Ammoniumsilikofluorid) im Gewichtsverhältnis Katalysator-Vorprodukt : Promotor von 100 : 2,5.

Des weiteren wird so verfahren, daß man in einer üblichen Wirbelbett-Apparatur

(1)     in einer ersten Stufe das mit dem Promotor vermischte Katalysator-Vorprodukt bei einer Temperatur von 650°C über eine Zeitspanne von 10 Stunden in Form eines Wirbelbetts vorliegen läßt
        mittels wasserfreier Luft als Trägergas;

        dann in einem Zwischentakt die Wirbelbett-Apparatur - mit dem Feststoff in Form eines Wirbelbetts -
        bei einer Temperatur von 325°C mit wasserfreiem
        und sauerstofffreiem Stickstoff als Trägergas
        sauerstofffrei spült; hierauf

(2) in einer zweiten Stufe, das aus der Stufe (1) erhaltene, gespülte Produkt bei einer Temperatur von 325°C über eine Zeitspanne von 1 Stunde in Form eines Wirbelbetts vorliegen läßt mittels wasserfreiem und sauerstofffreiem Stickstoff als Trägergas, dem - über die Gesamtzeit der Kohlenmonoxid-Behandlung gleichmäßig verteilt - insgesamt 200 Mol.% - bezogen auf den Chromtrioxid-Gehalt des aus der ersten Stufe (1) erhaltenen Produkts - Kohlenmonoxid zugesetzt sind; und schließlich

in einem Endtakt unter Wirbeln mit wasserfreiem und sauerstofffreiem Stickstoff auf Raumtemperatur bringt. Der auf diese Weise erhaltene Chromoxid-Trägerkatalysator wird wie nachstehend beschrieben zur Polymerisation eingesetzt.

b) Polymerisation mittels des Katalysators

Ein Rührautoklav wird mit 1000 Gewichtsteilen Cyclohexan beschickt, worauf man mit Stickstoff spült und 0,1 Gewichtsteile Katalysator zugibt. Bei einer thermostatisch geregelten Temperatur von 150°C preßt man reines Äthylen bis zu einem Druck von 35 bar auf, wartet zu, bis der Druck durch Bildung von Polyäthylen auf 25 bar gefallen ist, preßt dann wieder Äthylen bis zu einem Druck von 35 bar nach und verfährt so weiter für 90 Minuten. Hierauf bricht man die Polymerisation ab durch Abkühlen auf Raumtemperatur und Entspannen.

Man gewinnt 610 Gewichtsteile Polyäthylen mit einer Dichte von 0,96 g/cm$^3$ und einem Schmelzindex $MI_{2,16}$ von 4,8 g/10 min.

BASF Aktiengesellschaft — 9 — O.Z. 0050/032726

Beispiel 2

a) Herstellen des Katalysators

Es wird ausgegangen von einem Katalysator-Vorprodukt, bestehend aus einem mit Chromtrioxid im Gewichtsverhältnis Trägerstoff : Chromtrioxid von 100 : 2,0 homogen beladenen Siliciumdioxid/Aluminiumoxid-Mischoxid, welches 0,1 Gewichtsprozent - bezogen auf das Gesamtgewicht des Mischoxids - Aluminiumoxid enthält und eine Teilchengröße von 0,04 bis 1,5 mm hat.

Dieses Vorprodukt vermischt man mit einem Promotor (Ammoniumsilikofluorid) im Gewichtsverhältnis Katalysator-Vorprodukt : Promotor von 100 : 1,5.

Des weiteren wird so verfahren, daß man in einer üblichen Wirbelbett-Apparatur

(1) in einer ersten Stufe das mit dem Promotor vermischte Katalysator-Vorprodukt bei einer Temperatur von 550°C über eine Zeitspanne von 11 Stunden in Form eines Wirbelbetts vorliegen läßt mittels wasserfreier Luft als Trägergas; dann

in einem Zwischentakt die Wirbelbett-Apparatur - mit dem Feststoff in Form eines Wirbelbetts - bei einer Temperatur von 290°C mit wasserfreiem und sauerstofffreiem Stickstoff als Trägergas sauerstofffrei spült; hierauf

(2) in einer zweiten Stufe, das aus der Stufe (1) erhaltene, gespülte Produkt bei einer Temperatur von 300°C über eine Zeitspanne von 1 Stunde in Form eines Wirbelbetts vorliegen läßt mittels wasserfreiem und sauerstofffreiem Stickstoff als Trägergas, dem - über die Gesamtzeit der Kohlenmonoxid-Behandlung gleichmäßig verteilt - insgesamt 150 Mol.% - bezogen auf den Chromtrioxid-Gehalt des aus der ersten Stufe (1) erhaltenen Produkts - Kohlenmonoxid zugesetzt sind; und schließlich

in einem Endtakt unter Wirbeln mit wasserfreiem und sauerstofffreiem Stickstoff auf Raumtemperatur bringt.

b) Polymerisation mittels des Katalysators

Sie erfolgt wie in Beispiel 1.

Man gewinnt 540 Gewichtsteile Polyäthylen mit einer Dichte von 0,96 g/cm$^3$ und einem Schmelzindex $MI_{2,16}$ von 7 g/10 min.

Beispiel 3

a) Herstellen des Katalysators

Es wird ausgegangen von einem Katalysator-Vorprodukt, bestehend aus einem mit Chromtrioxid im Gewichtsverhältnis Trägerstoff : Chromtrioxid von 100 : 4,5 homogen beladenen Siliciumdioxid/Aluminiumoxid-Mischoxid, welches 0,3 Gewichtsprozent - bezogen auf das Gesamtgewicht des Mischoxids- Aluminiumoxid enthält und eine Teilchengröße von 0,04 bis 1,5 mm hat.

Des weiteren wird so verfahren, daß man in einer üblichen Wirbelbett-Apparatur

(1) in einer ersten Stufe das Katalysator-Vorprodukt bei einer Temperatur von 680°C über eine Zeitspanne von 8 Stunden in Form eines Wirbelbetts vorliegen läßt mittels wasserfreier Luft als Trägergas; dann

in einem Zwischentakt die Wirbelbett-Apparatur - mit dem Feststoff in Form eines Wirbelbetts - bei einer Temperatur von 300°C mit wasserfreiem und sauerstofffreiem Stickstoff als Trägergas sauerstofffrei spült; hierauf

(2) in einer zweiten Stufe, das aus der Stufe (1) erhaltene, gespülte Produkt bei einer Temperatur von 330°C über eine Zeitspanne von 1 Stunde in Form eines Wirbelbetts vorliegen läßt mittels wasserfreiem und sauerstofffreiem Stickstoff als Trägergas, dem - über die Gesamtzeit der Kohlenmonoxid-Behandlung gleichmäßig verteilt - insgesamt 300 Mol.% - bezogen auf den Chromtrioxid-Gehalt des aus der ersten Stufe (1) erhaltenen Produkts - Kohlenmonoxid zugesetzt sind; und schließlich

in einem Endtakt unter Wirbeln mit wasserfreiem und sauerstofffreiem Stickstoff auf Raumtemperatur bringt.

b) Polymerisation mittels des Katalysators

Sie erfolgt wie in Beispiel 1.

Man gewinnt 620 Gewichtsteile Polyäthylen mit einer Dichte von 0,96 $g/cm^3$ und einem Schmelzindex $MI_{2,16}$ von 5,1 g/10 min.

0000748

Beispiel 4

a) Herstellen des Katalysators

Es wird verfahren wie in Beispiel 3, mit der Ausnahme, daß in der ersten Stufe (1) bei einer Temperatur von 570°C (statt 680°C) gearbeitet wird.

b) Polymerisation mittels des Katalysators

Es wird verfahren wie in Beispiel 1, mit den Ausnahmen, daß bei einer Temperatur von 146°C (statt 150°C) gearbeitet wird und daß man statt Äthylen ein Gemisch aus 98,5 Gewichtsteilen Äthylen und 1,5 Gewichtsteilen Buten-1 polymerisiert.

Man gewinnt 575 Gewichtsteile eines Äthylen-Buten-1-Copolymerisats mit einer Dichte von 0,94 $g/cm^3$ und einem Schmelzindex $MI_{2,16}$ von 5,2 g/10 min.

**BASF Aktiengesellschaft** - 13 - O.Z. 0050/032726

Patentanspruch

Verfahren zum Herstellen von Homopolymerisaten des Äthylens oder Copolymerisaten des Äthylens mit bis zu 15 Mol.% - bezogen auf das Äthylen - $C_3$- bis $C_8$-$\alpha$-Monoolefinen durch Polymerisation des bzw. der Monomeren bei Temperaturen von 100 bis 200°C in einem unter den Verfahrensbedingungen flüssigen, gesättigten Kohlenwasserstoff, in dem sowohl das Monomere bzw. die Monomeren als auch das gebildete Polymerisat sich lösen, mittels eines Chromoxid-Trägerkatalysators, der erhalten wird aus einem Katalysator-Vorprodukt - welches seinerseits ein mit einer Chromverbindung, welche Chromtrioxid oder eine unter den Bedingungen der Stufe (1) in Chromtrioxid übergehende Chromverbindung ist, im Gewichtsverhältnis Trägerstoff : Chromverbindung (gerechnet als Chromtrioxid) von 100 : 0,1 bis 100 : 10 homogen beladener, aus Siliciumdioxid bestehender bzw. auf Siliciumdioxid basierender kleinteiliger Trägerstoff ist - indem man

(1) das Katalysator-Vorprodukt - gegebenenfalls unter Zusatz eines Promotors im Gewichtsverhältnis Katalysator-Vorprodukt : Promotor von 100 : 0,1 bis 100 : 10 - in der Hitze mit einem Sauerstoff enthaltendem Gas behandelt, und dann

(2) auf das aus Stufe (1) erhaltene Produkt Kohlenmonoxid einwirken läßt,

dadurch gekennzeichnet, daß man als Chromoxid-Trägerkatalysator einen solchen einsetzt, bei dessen Herstellung aus dem Katalysator-Vorprodukt man in den Stufen (1) sowie (2) jeweils den Feststoff in Form eines Wirbelbetts vorliegen läßt, das durch einen Trägergasstrom aufrecht erhalten wird, mit den Maßgaben, daß

(1)    in Stufe (1) die Sauerstoff-Behandlung bei einer Temperatur von 400 bis 1500°C über eine Zeitspanne von wenigstens 30 Minuten erfolgt mittels eines wasserfreien Trägergases, welches aus 10 bis 100 Vol.% Sauerstoff und - zu 100 Vol.% ergänzend - 90 bis 0 Vol.% Stickstoff besteht, und

(2)    in Stufe (2) die Kohlenmonoxid-Behandlung bei einer Temperatur von 250 bis 500°C über eine Zeitspanne von 0,5 bis 3 Stunden erfolgt mittels eines wasserfreien und sauerstofffreien Trägergases, welches aus Stickstoff besteht, dem - über die Gesamtzeit der Kohlenmonoxid-Behandlung gleichmäßig verteilt - insgesamt 100 bis 1000 Mol.% - bezogen auf den Chromtrioxid-Gehalt des aus Stufe (1) erhaltenen Produkts - Kohlenmonoxid zugesetzt sind.

0000748

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US – A – 3 362 946 (J.P.HOGAN)<br>* Patentansprüche 1,2,4; Spalte 2, Zeilen 32-55; Zeile 70 – Spalte 3, Zeile 23 * | 1 |
| X | DERWENT "Soviet inventions illustrated", Chemical Section 1, Vol. W, Nr. 31 (1975)<br>* Section A, Seite 1, rechte Spalte *<br>& SU – A – 373 986 | 1 |
| | DE – B – 1 115 023 (PHILIPS PETROLEUM)<br>* Ansprüche 1-8; Spalte 1, Zeilen 1-6 * | 1 |
| | FR – A – 1 302 764 (PHILIPS PETROLEUM)<br>* Zusammenfassung A; Beispiel 1 * | 1 |
| | DE – B – 1 906 175 (PHILLIPS PETROLEUM)<br>* Ansprüche 1,2; Spalte 3, Zeilen 30-51, 63 – Spalte 4, Zeile 11 * | 1 |

**KLASSIFIKATION DER ANMELDUNG (Int.Cl.²)**

C 08 F 10/00
C 08 F 4/24
C 08 F 4/22

**RECHERCHIERTE SACHGEBIETE (Int. Cl.³)**

C 08 F 10/00–
C 08 F 10/14
C 08 F 110/00–
C 08 F 110/14
C 08 F 210/00–
C 08 F 210/18

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-10-1978 | WEBER |

EPA form 1503.1 06.78